# EUROPÄISCHE PATENTSCHRIFT

(11) **EP 1 334 787 B1**
(45) Veröffentlichungstag und Bekanntmachung des Hinweises auf die Patenterteilung: **14.06.2006**
(21) Anmeldenummer: 03001672.9
(22) Anmeldetag: 25.01.2003
(51) Int. Cl.: B23B 51/00

(54) **Rundlaufschneidwerkzeug**
Rotary cutting tool
Outil de coupe rotatif

(30) Priorität: 01.02.2002 DE 10204105
(43) Veröffentlichungstag der Anmeldung: 13.08.2003
(73) Patentinhaber: KENNAMETAL INC., Latrobe, PA 15650-0231 (US)
(72) Erfinder: Prokop, Hermann, 91413 Neustadt/Aisch (DE)
(74) Vertreter: Tergau & Pohl Patentanwälte

(56) Entgegenhaltungen:
- EP-A- 0 137 898
- EP-A- 0 901 860
- DE-A- 4 026 603
- DE-U- 8 901 319
- DE-U- 29 919 858
- GB-A- 2 085 769
- US-A- 3 443 459
- US-A- 3 977 807
- US-A- 4 605 347

## Beschreibung

Die Erfindung betrifft ein Rundlaufschneidwerkzeug, beispielsweise einen Bohrer, einen Senker oder eine Reibahle, mit mindestens zwei Schneiden, die jeweils eine Hauptschneide aufweisen und, insbesondere symmetrisch, um die Mittelachse eines Schneidenteils angeordnet sind.

Ein derartiges, als Bohrer ausgebildetes Rundlaufschneidwerkzeug ist beispielsweise aus der WO 01/76794 A1 bekannt. Dieser Bohrer weist mehrere Schneiden auf, die jeweils entweder durch Spitzenanschliff des Bohrers selbst hergestellt oder Teil eines Schneideinsatzes sind. Die Schneiden sind an deren außen liegenden Ecken von so genannten Nasen begrenzt, die jeweils mehrere Krümmungsradien aufweisen. Durch diese abgerundeten Nasen soll die bearbeitete Bohrung eine gute Oberflächenqualität aufweisen. Ferner soll eine hohe Bearbeitungsgeschwindigkeit beim Bohren von Metall erreichbar sein. Beim Bohren besteht jedoch die Gefahr eines Ausbrechens einer der einen Teil jeder Schneidkante bildenden Nasen.

Der Erfindung liegt die Aufgabe zugrunde, ein mechanisch besonders stabiles Rundlaufschneidwerkzeug, insbesondere einen Bohrer anzugeben, das in einem einzigen Arbeitsgang sowohl eine hohe Zerspanungsleistung als auch eine eine sehr gute Oberflächenqualität erzeugende Schlichtbearbeitung gewährleistet.

Diese Aufgabe wird erfindungsgemäß gelöst durch die Merkmale des Anspruchs 1. Hierbei weisen mehrere Schneiden eines Rundlaufwerkzeuges, insbesondere eines Bohrers, jeweils eine Hauptschneide auf. Des Weiteren ist mindestens eine als Schlichtschneide ausgebildete Nebenschneide vorgesehen, die einer der Hauptschneiden zugeordnet ist, sich jedoch nicht notwendigerweise an diese anschließt. Die Hauptschneiden decken nicht den gesamten Durchmesser des die Hauptschneiden und Nebenschneiden tragenden Schneidenteils ab, wobei der Durchmesser des Schneidenteils im Fall eines Bohrers dem Bohrungsdurchmesser entspricht. Das Schneidenteil des Rundlaufschneidwerkzeuges weist den größten Durchmesser in einem sogenannten äußeren Schlichtbereich der Nebenschneide auf. Anschließend hieran, d.h. in Richtung zum Einspannende des Werkzeugs, verjüngt sich dieses wieder. Um eine besonders hohe Oberflächenqualität zu erzeugen, ist die Nebenschneide derart gekrümmt, dass der Krümmungsradius im Bereich des maximalen Durchmessers des Schneidenteils mindestens so groß wie der maximale Schneidenradius an derselben Stelle ist, der im Fall eines Bohrers dem Bohrungsradius entspricht. Insbesondere kann die Nebenschneide in einem Teilbereich deren Länge im Bereich des maximalen Schneidenradius einen annähernd oder vollkommen geraden Bereich aufweisen. Im Fall einer geraden Ausbildung der Nebenschneide im Bereich des maximalen Schneidenradius entspricht die Länge des geraden Schneidenabschnitts vorzugsweise dem doppelten Vorschub des Rundlaufschneidwerkzeugs.

Bevorzugt geht der Krümmungsradius der Nebenschneide anschließend an den äußeren Schlichtbereich sowohl in Richtung zu den Hauptschneiden hin als auch in entgegengesetzter Richtung, d.h. zum Einspannende hin, in einen kleineren Krümmungsradius über. Der Übergang der Krümmungsradien kann hierbei kontinuierlich erfolgen. Insbesondere kann ein besonders gleichmäßiger Übergang zwischen benachbarten Krümmungsradien dadurch gegeben sein, dass die Nebenschneide einen elliptischen Bogen beschreibt.

Die Erfindung geht von der Überlegung aus, dass bei der spanabhebenden Bearbeitung im Arbeitsschritt der Schlichtbearbeitung zur Erzielung einer guten Oberflächenqualität eine Schneidenform mit leicht gekrümmter Kante vorteilhaft ist. Durch eine derartige Schneidenform können insbesondere Rillen in der zu bearbeitenden Oberfläche zumindest weitgehend vermieden werden. Schneiden mit gekrümmten Kanten sind beispielsweise bei zum Drehen verwendeten Schneidplatten gebräuchlich.

Einen weiteren Gesichtspunkt bei der Gestaltung von Schneidwerkzeugen stellen die zu beherrschenden Schneidkräfte dar. Um geringe Schneidkräfte zu gewährleisten, ist bei gebräuchlichen Bohrern der Übergang von den Hauptschneiden zur jeweils anschließenden Kante des Schneidenteils üblicherweise scharfkantig ausgeführt. Dies hat jedoch außer dem Nachteil der Bildung einer Oberfläche eingeschränkter Güte insbesondere auch den Nachteil eines schnellen Verschleißes des Bohrers sowie einer leichten Beschädigung im Bereich der Schneidenecke. Selbst bei einem Schneideinsatz für einen Bohrer mit ausgeprägt abgerundeter Ausbildung der außenliegenden, das heißt am Rand des Bohrers liegenden, Ecke der Schneide, wie er z.B. aus der WO 00/21704 A1 bekannt ist, sind die Radien der Schneide im Vergleich zum Bohrungsradius relativ klein. So wird in diesem Fall für einen Bohrungsdurchmesser von 13 mm bis 18 mm ein größter Eckenradius von 1,6 mm bis 4,0 mm angegeben, woraus sich ein Schneidenradius/ Bohrungsradius-Verhältnis von 0,25 bis 0,44 ergibt. Mit dieser Schneidengestaltung besteht insbesondere bei hohem Vorschub ein wesentliches Risiko eines Ausbrechens von Teilen der Schneide im Bereich deren Ecke.

Durch die erfindungsgemäße Schneidengestaltung des auch als Ausbohrwerkzeug oder kurz als Schneidwerkzeug bezeichneten Rundlaufschneidwerkzeugs werden die genannten, bei Werkzeugen nach dem Stand der Technik auftretenden Probleme vermieden. Die Hauptzerspanungsleistung wird durch die nicht den vollen Bearbeitungsdurchmesser abdeckenden Hauptschneiden erbracht. Die durch die Hauptschneiden erzeugte Oberflächenqualität ist nicht relevant, da eine Nachbearbeitung durch die Schlichtschneide erfolgt. Diese erzeugt bei relativ geringer Zerspanungsleistung eine glatte Oberfläche. Aufgrund des geringen durch die Schlicht- oder Nebenschneide abgehobenen Spanquerschnitts wirken auf diese nur vergleichsweise geringe Schneidkräfte ein. Dadurch ergibt sich als weiterer Vorteil eine geringe Verschleißanfälligkeit der Nebenschneide. Die Gestaltung der Hauptschneiden kann, mit Ausnahme des Randbereiches am Bohrer, der herkömmlichen Schneidengestaltung bei Rundlaufwerkzeugen, insbesondere Bohrern, wie sie z.B. aus der DE 28 51 183 A1 bekannt sind, zumindest weitgehend entsprechen.

Um das Risiko eines Ausbrechens von Material im Eckenbereich einer Schneide praktisch vollständig auszuschließen, schließt eine an eine Hauptschneide anschließende Schlichtschneide mit dieser vorzugsweise einen stumpfen Übergangswinkel von mindestens 140° und maximal 179° ein. Sofern gemäß einer altemativen Ausführungsform die Schlichtschneide an einem Schneideneck nicht an die dieser zugeordneten Hauptschneide sondern an eine sonstige Kante oder Fläche, beispielsweise die Freifläche der Hauptschneide grenzt, ist der Übergangswinkel durch den Winkel zwischen der Schlichtschneide und der am Schneideneck in Richtung zur Spitze des Schneidwerkzeugs anschließenden Kante beziehungsweise Fläche gegeben. Der Eckenradius im Übergangsbereich zwischen Hauptschneide beziehungsweise sonstiger Kante oder Fläche, insbesondere Freifläche, und anschließender Nebenschneide ist für die erzielbare Oberflächenqualität nicht relevant, da das zu zerspanende Material in diesem Bereich vollständig abgetragen wird. Dies ergibt sich daraus, dass der Hauptschneidenradius geringer ist als der Bearbeitungs-, insbesondere Bohrungsradius, der durch die Schlichtschneiden bestimmt ist. Im Übergangsbereich zwischen Hauptschneide und anschließender Nebenschneide kann weiterhin eine Schutzfase vorgesehen sein, durch die die Gefahr einer Beschädigung des Rundlaufschneidwerkzeugs an dieser Stelle weiter verringert wird. Auch diese Schutzfase ist ohne negativen Einfluss auf die erzielbare Oberflächenqualität.

Trotz des großen Übergangswinkels zwischen Haupt- und Nebenschneide kann der Spitzenwinkel mit beispielsweise 120° ähnlich groß wie bei herkömmlichen Rundlaufschneidwerkzeugen, z.B. einem Bohrer nach der DE 28 51 183 A1, sein. Dies ist dadurch ermöglicht, dass die Hauptschneiden nicht den gesamten Bearbeitungs-, insbesondere Bohrungsdurchmesser, abdecken. Vielmehr wird ein Teil des zu bearbeitenden Materials innerhalb des Bearbeitungsdurchmessers von den Schlichtschneiden abgetragen. Die Schlichtschneiden sind hierbei derart gekrümmt, dass diese im äußeren Schlichtbereich, der den Bearbeitungsdurchmesser bestimmt, parallel zur Mittelachse oder an der Oberfläche eines zur Mittelachse symmetrischen Zylinders verlaufen, und sich sowohl in Richtung zu den Hauptschneiden als auch in entgegengesetzter Richtung zur Mittelachse hin krümmen. Hierbei ist die Krümmung der Schlichtschneiden in Richtung zu den Hauptschneiden, d.h. zur Spitze des Werkzeugs, bevorzugt stärker ausgeprägt als in entgegengesetzter Richtung, d.h. in Richtung zum Einspannende des Rundlaufschneidwerkzeugs. Das Einspannende selbst, d.h. der zum Einspannen in ein Futter vorgesehene Teil des Rundlaufschneidwerkzeugs kann in üblicher Weise wiederum einen größeren Durchmesser aufweisen als der mit den Schneiden - sowohl Haupt- als auch Schlichtschneiden - versehene vordere als Schneidenteil bezeichnete Teil des Werkzeugs.

Nach einer bevorzugten Ausführungsform ist ein Nachschleifen der Hauptschneiden mit einem geringen Aufwand dadurch ermöglicht, dass sich anschließend an die einzelnen Hauptschneiden jeweils ein axialer Schneidenbereich erstreckt. Der axiale Schneidenbereich ist, soweit er parallel zur Mittelachse des Rundlaufwerkzeugs verläuft, weder für die erzielbare Oberflächenqualität noch für die Zerspanungsleistung maßgebend. Ein teilweises Abschleifen des axialen Schneidenbereichs ändert somit die Eigenschaften des Rundlaufwerkzeugs in keiner relevanten Weise. Der Übergangswinkel zwischen der Hauptschneide und dem axialen Schneidenbereich hat vorzugsweise einen Wert von mindestens 110° und maximal 121°. Der Übergangsbereich zwischen der Hauptschneide und dem axialen Schneidenbereich kann analog dem Übergangsbereich zwischen der Hauptschneide und der Schlichtschneide im Fall eines Rundlaufschneidwerkzeugs ohne axialen Schneidenbereich scharfkantig, mit einem Eckenradius, und/oder mit einer Schutzfase ausgebildet sein.

Der an die Hauptschneide anschließende Axialbereich trennt die Hauptschneide von der zugehörigen Nebenschneide. Dabei kann die Nebenschneide in Relation zur Hauptschneide am Umfang des Rundlaufschneidwerkzeugs versetzt sein. Durch diese Haupt-/Nebenschneidentrennung werden - sowohl mit als auch ohne Versatz der Schneiden am Werkzeugumfang - bei der spanabhebenden Bearbeitung zwei getrennte Späne erzeugt. Während die Hauptschneide den Hauptschnittdruck erzeugt, ist die Schlicht- oder Nebenschneide für die hohe erzielbare Oberflächenqualität verantwortlich. Die Spanteilung hat neben diesem Vorteil der definierten Trennung von im selben Arbeitsgang durchgeführter Schrupp- und Schlichtbearbeitung den weiteren Vorteil einer leichteren Spanabfuhr im Vergleich zu einer herkömmlichen Bearbeitung, bei der ein einziger Span den gesamten Bearbeitungsradius einnimmt.

Die Länge des axialen Schneidenbereichs ist nach einer bevorzugten Ausgestaltung geringer als der dem Bearbeitungsradius entsprechende maximale Schneidenradius des Rundlaufschneidwerkzeugs, insbesondere geringer als 40% des maximalen Schneidenradius. Dies ist für die Nachschleifbarkeit ausreichend; gleichzeitig wird im zu bearbeitenden Werkstück annähernd in der gesamten Bearbeitungstiefe längs des Rundlaufschneidwerkzeugs ein konstanter Bearbeitungsdurchmesser erreicht.

Bei einem Rundlaufschneidwerkzeug entweder mit oder ohne axialen Schneidenbereich beträgt der maximale Nebenschneidenwinkel, das heißt der maximale Winkel der Schlicht- oder Nebenschneide in Bezug zur Mittelachse, bevorzugt mindestens 30° und maximal 60°, insbesondere 45°. Hierbei bleibt der Übergangsbereich zwischen Haupt- und Nebenschneide außer Betracht.

Die Schlichtschneiden tragen vom zu bearbeitenden Werkstück lediglich einen schmalen definierten Span ab, während die Hauptschneiden für die hohe Zerspanungsleistung verantwortlich sind. Eine durch die Schlichtschneiden erzeugte hohe Oberflächenqualität bei gleichzeitig hoher Zerspanungsleistung wird bevorzugt dadurch erzeugt, dass der Hauptschneidenradius mindestens 90% und maximal 98% des maximalen Schneidenradius beträgt.

Um die bei der Bearbeitung erzeugte hohe Oberflächenqualität nicht durch weiter hinten liegende, d.h. von den Hauptschneiden entfernte Bereiche des Rundlaufschneidwerkzeuges zu beeinträchtigen, verjüngt sich der Durchmesser des Schneidenteils im Anschluss an den äußeren Schlichtbereich, d.h. in Richtung von den Hauptschneiden weg. Dies hat weiterhin den Vorteil, dass thermisch bedingte Abmessungsänderungen des Werkzeugs bei der Bearbeitung höchstens in einem geringen Maß die erzielbare Oberflächenqualität beeinträchtigen.

Nach einer bevorzugten Weiterbildung weist das Rundlaufschneidwerkzeug zusätzlich zu den Hauptschneiden mindestens eine auch als Reibschneide bezeichnete Nebenschneide ohne eine an diese anschließende Hauptschneide auf. Vorzugsweise entspricht die Anzahl der Reibschneiden der Anzahl der Hauptschneiden. Die Reibschneide übernimmt die Funktion der Fertigbearbeitung der Bearbeitungs-, insbesondere Bohrungsoberfläche, und hat zu diesem Zweck innerhalb des Rundlaufschneidwerkzeuges den größten Abstand von der Mittelachse. Der Bearbeitungsdurchmesser wird somit von der Reibschneide bestimmt. Diese Ausführungsform des Rundlaufwerkzeugs ist insbesondere für kurzspanende Werkstoffe, beispielsweise Gusswerkstoffe, geeignet.

Nachfolgend wird ein Ausführungsbeispiel der Erfindung anhand einer Zeichnung näher erläutert. Darin zeigen
- Fig. 1: ein als Bohrer ausgebildetes Rundlaufschneidwerkzeug,
- Fig. 2: eine Draufsicht auf das Rundlaufschneidwerkzeug nach Fig. 1,
- Fig. 3: ausschnittsweise eine Haupt- und Nebenschneide des Rundlaufschneidwerkzeuges nach Fig. 1,
- Fig. 4: ein als Bohrer ausgebildetes Rundlaufschneidwerkzeug mit geraden Spannuten und mit Reibschneiden,
- Fig. 5: eine Draufsicht auf das Rundlaufschneidwerkzeug nach Fig. 4,
- Fig. 6: ausschnittsweise eine Reibschneide des Rundlaufschneidwerkzeuges nach Fig. 4.

Einander entsprechende Teile sind in allen Figuren mit den gleichen Bezugszeichen versehen.

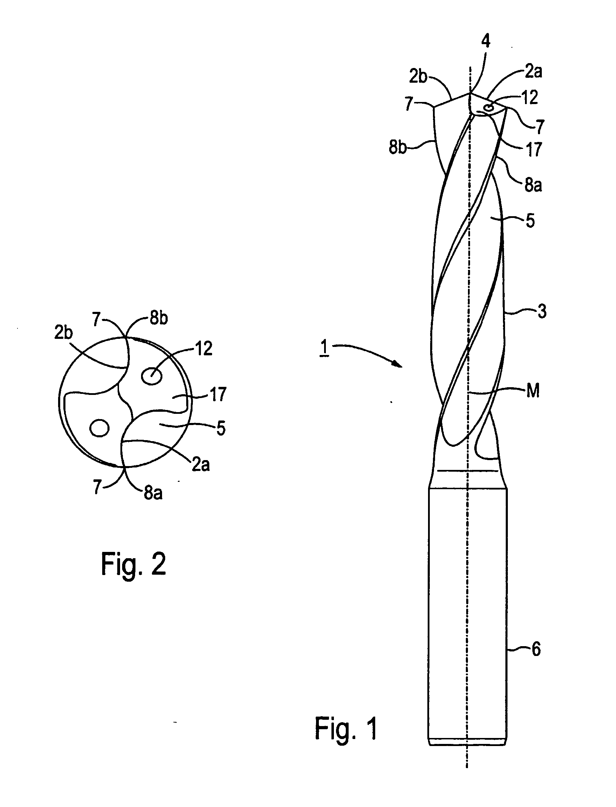

Die Fig. 1 bis 3 zeigen ein als Bohrer 1 ausgebildetes Ausbohrwerkzeug, allgemein als Rundlaufschneidwerkzeug bezeichnet, mit zwei Hauptschneiden 2a,2b, die symmetrisch zur Mittelachse M eines Schneidenteils 3 angeordnet sind. Die Hauptschneiden 2a,2b sind durch Schleifen aus dem Material des Schneidenteils 3 erzeugt und stoßen an einer Spitze 4 des Bohrers 1 stumpfwinklig aneinander. Von der Spitze 4 aus verlaufen schraubenförmig zwei Spannuten 5 bis zu einem Einspannende oder Aufnahmebereich 6 des Bohrers 1. Eine Ausführungsform mit einer höheren Anzahl an Hauptschneiden ist ebenfalls realisierbar.

Im Ausführungsbeispiel nach Fig. 1 sind die Hauptschneiden 2a,2b symmetrisch um die Mittelachse M des Schneidenteils 3 und des Bohrers 1 angeordnet. Insbesondere bei einer höheren Anzahl an Hauptschneiden können diese jedoch zumindest teilweise auch asymmetrisch um die Werkzeugachse verteilt sein. Eine derart asymmetrische oder teilsymmetrische Gestaltung kommt beispielsweise bei einem dreischneidigen Werkzeug in Betracht. Das Material des Schneidenteils 3 kann jeder verschleißfeste Werkstoff, wie HSS, Hartmetall, Cermet, Keramik, CBN, PKD, jeweils beschichtet oder unbeschichtet, sein.

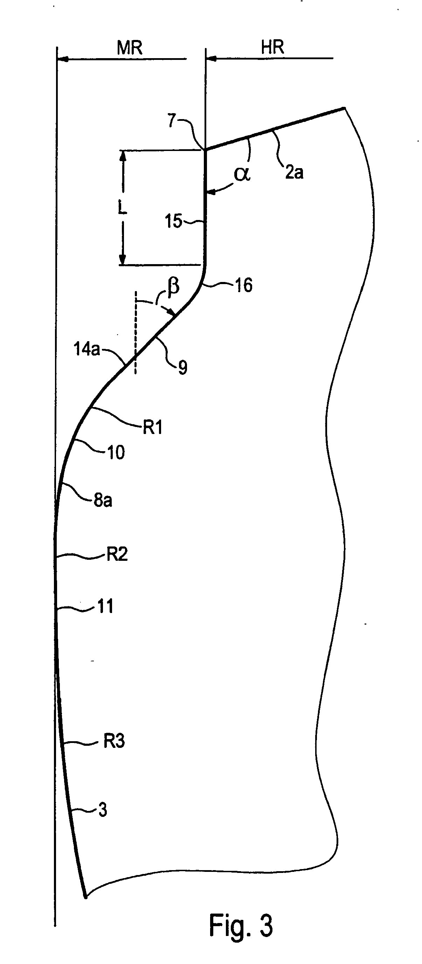

Die Hauptschneide 2a grenzt als Kante, wie aus Fig. 3 ersichtlich, an einem Schneideneck 7 unter einem Übergangswinkel α an einen parallel zur Mittelachse M verlaufenden Axialbereich 15. Die Lage des Schneidenecks 7 bestimmt einen Hauptschneidenradius HR. Durch die Hauptschneiden 2a,2b wird das innerhalb des Hauptschneidenradius HR befindliche Material des zu bearbeitenden Werkstücks zerspant. An den Axialbereich 15 schließt sich ein Krümmungsbereich 16 an, der wiederum in eine auch als Übergangsbereich bezeichnete Einführungsfase 9 übergeht, an die sich ein gekrümmter Bereich 10 mit im Vergleich zum Krümmungsbereich 16 entgegengesetzter Krümmung anschließt. Der Axialbereich 15, der Krümmungsbereich 16, der gerade ausgebildete Übergangsbereich 9, sowie der gekrümmte Bereich 10 bilden zusammen eine Nebenschneide 8a. Durch die Einführungsfase 9 ist das Einführen des Bohrers 1 in das zu bearbeitende Werkstück erleichtert und das Risiko eines Ausbrechens von Teilen der als Schlichtschneide ausgebildeten Nebenschneide 8a gemindert.

Außerhalb des Hauptschneidenradius HR erfolgt die Zerspanung durch die Nebenschneide 8a sowie eine weitere, in der Fig. 3 nicht sichtbare, der Hauptschneide 2b zugeordnete Nebenschneide 8b. Der gekrümmte Bereich 10 der Nebenschneide 8a weist verschiedene Krümmungsradien R1,R2,R3 auf, wobei der maximale Schneidenradius MR im Bereich des Krümmungsradius R2 in einem äußeren Schlichtbereich 11 liegt. Der äußere Schlichtbereich 11 ist bestimmend für die erzielbare Oberflächenqualität der erzeugten Bohrung. Der Krümmungsradius R2 ist größer als der dem Bohrungsradius entsprechende maximale Schneidenradius MR. Die Hauptschneide 2a bildet zusammen mit der an diese anschließende Nebenschneide 8a eine Schneide 14a, die Hauptschneide 2b mit der Nebenschneide 8b entsprechend eine Schneide 14b.

Aufgrund des Axialbereichs 15 ist ein Nachschleifen der Hauptschneiden 2a,2b problemlos möglich, ohne die Eigenschaften des Bohrers 1 wesentlich zu beeinflussen. Der Axialbereich 15 weist eine Länge L auf, die gering im Vergleich zum maximalen Schneidenradius MR ist. Auf diese Weise wird erreicht, dass der Bohrungsdurchmesser auch im Fall eines Sackloches lediglich in einem geringen Teil der Bohrung vom maximalen Schneidenradius MR abweicht. Die leichte Nachschleifbarkeit des Bohrers 1 ermöglicht insbesondere bei Bohrerdurchmessern, die noch keinen Einsatz von Schneidplatten erlauben, beispielsweise Durchmessern bis 16 mm, eine verlängerte Nutzungsdauer des einteiligen Bohrers 1 bei gleichzeitig hoher erzielbarer Oberflächenqualität.

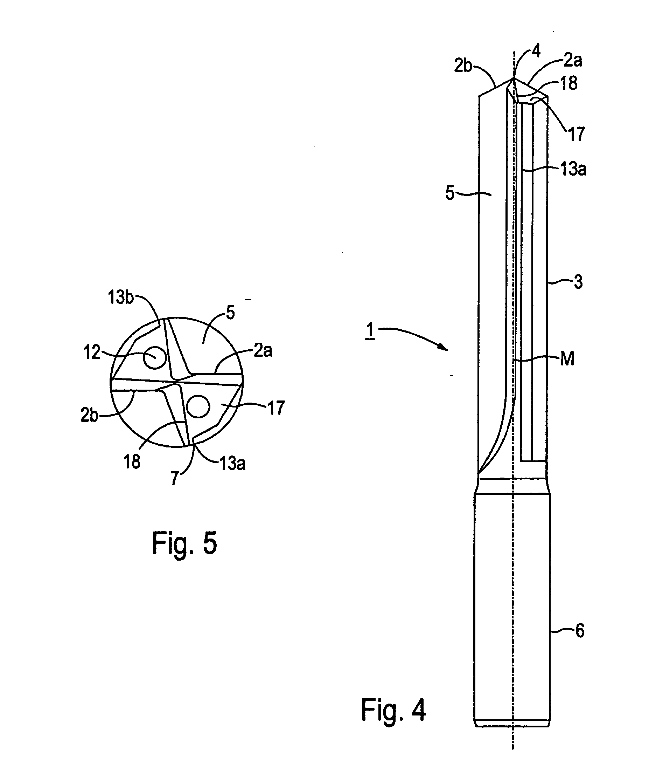

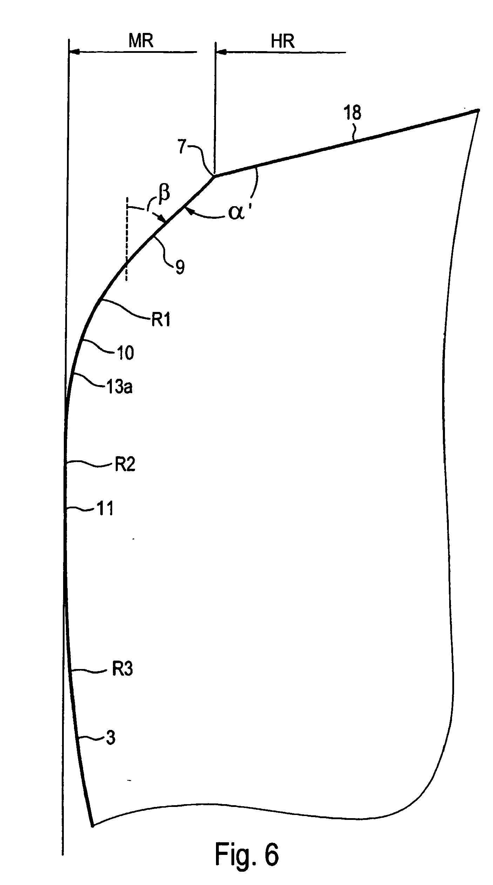

Abweichend von der dargestellten einteiligen Ausbildung des Rundlaufschneiwerkzeugs 1 kann dieses auch mehrteilig mit einem auf einen den Aufnahmebereich 6 umfassenden Grundkörper aufsetzbaren separaten Schneidenteil 3 ausgeführt sein. Ein solcher modularer Aufbau des Rundlaufschneidwerkzeugs 1, beispielsweise Bohrers, Senkers, Reibahle oder kombinierten Ausbohrwerkzeugs, ist insbesondere bei größeren Werkzeugdurchmessern vorteilhaft. Im Ausführungsbeispiel bilden das Schneidenteil 3 und der Aufnahmebereich 6 einen einteiligen Grundkörper des Rundlaufschneidwerkzeugs 1. Im Grundkörper können insbesondere die Nebenschneiden 8a,8b beziehungsweise die als Reibschneiden ausgebildeten Nebenschneiden 13a,13b (Fig. 4 bis 6) als Einsätze gehalten sein. Der Grundkörper ist aus einem zähharten Material, bevorzugt Hartmetall oder Cermet, gefertigt. Als Material für die Nebenschneiden 8a,8b beziehungsweise die Reibschneiden 13a,13b wird vorzugsweise ein hochverschleißfester Werkstoff, insbesondere polykristalliner Diamant (PKD) oder kubisches Bornitrit (CBN) verwendet.

Der Vorschub des Bohrers 1 ist vorzugsweise sehr gering im Vergleich zum Krümmungsradius R2. Dadurch werden im äußeren Schlichtbereich 11 sehr dünne Späne abgehoben, deren leicht gekrümmter Spanquerschnitt in sehr guter Näherung parallel zur Werkstückoberfläche liegt, so dass eine Oberfläche sehr geringer Rauhigkeit erzeugt wird, die insbesondere zumindest nahezu keine Rillen längs des Umfangs der Bohrung aufweist. Der Axialbereich 15 bewirkt eine Spanteilung, d. h. die Hauptschneide 2a und die Nebenschneide 8a heben separate Späne ab. Die Schruppbearbeitung - innerhalb des Hauptschneidenradius HR - ist somit auf definierte Weise getrennt von der Schlichtbearbeitung durch die Nebenschneide 8a.

Die Nebenschneide 8a ist gegenüber der Mittelachse M um einen Nebenschneidenwinkel β schräg gestellt, der in keinem Bereich der Nebenschneide mehr als 45° beträgt. Im Bereich des Krümmungsradius R3, das heißt anschließend an den äußeren Schlichtbereich 11 in Richtung zum Aufnahmebereich 6 des Bohrers 1, verjüngt sich das Schneidenteil 3 leicht. Der Nebenschneidenwinkel β ist in diesem Bereich damit negativ. Dies hat zum einen den Vorteil, dass eine Beeinträchtigung der Oberfläche der Bohrung beim Zurückziehen des Bohrers 1 durch Bereiche des Schneidenteils 3 zumindest weitgehend ausgeschlossen wird. Zum anderen ist der Bohrer 1 durch diese Verjüngung des Schneidenteils 3 unempfindlicher gegenüber einer thermisch bedingten Ausdehnung des Bohrers 3 als ein Bohrer, der eine solche Verjüngung nicht aufweist.

Die Fig. 4 bis 6 zeigen in verschiedenen Darstellungen eine alternative Ausführungsform eines Rundlaufschneidwerkzeugs 1. Der Bohrer 1 nach Fig. 4 ist mit geraden Spannuten 5 insbesondere zum Bohren von Gusswerkstoffen geeignet. Parallel zur Mittelachse M weist das Schneidenteil 3 zwei Kühlkanäle 12 auf. Am Schneidenteil 3 sind zwei in Relation zu den Hauptschneiden 2a,2b am Umfang des Bohrers 1 versetzte als Reibschneiden ausgebildete Nebenschneiden 13a,13b angeordnet. Diese die Schlichtschneiden des Bohrers 1 bildenden Reibschneiden 13a,13b bestimmen den maximalen Schneidenradius MR sowie die mit dem Bohrer 1 erzielbare Oberflächenqualität. An die den Hauptschneiden 2a,2b zugeordneten Reibschneiden 13a,13b schließt sich keine Hauptschneide direkt an. Vielmehr grenzt die Reibschneide 13a am Schneideneck 7 an eine an die Hauptschneide 2a anschließende Nebenfreifläche 17 und schließt mit der diese begrenzenden Kante, der Freiflächenkante 18, einen Übergangswinkel α' ein. Hierbei kann, wie insbesondere aus der Fig. 5 ersichtlich ist, die Freiflächenkante 18 etwas vom Schneideneck 7 der Reibschneide 13a beabstandet sein. Der Übergangswinkel α' ist in diesem Fall durch den Winkel zwischen der Reibschneide 13 a und den am Schneideneck 7 angrenzenden Bereich der nicht notwendigerweise eben ausgebildeten Nebenfreifläche 17 gegeben. Das Schneideneck 7 ist im Vergleich zur Hauptschneide 2a etwas nach hinten in Richtung zum Aufnahmebereich 6 versetzt und befindet sich somit nicht im Eingriff mit dem zu bearbeitenden Werkstück. Der Abstand des Schneidenecks 7 von der Mittelachse M entspricht bei einem Rundlaufschneidwerkzeug 1 nach Fig. 4 nicht notwendiger weise dem Hauptschneidenradius HR. Auch bei einem derartigen Rundlaufschneidwerkzeug 1 schließt sich an die Hauptschneiden 2a,2b vorzugsweise jeweils ein Axialbereich 15, wie in Fig. 3 dargestellt, an. Die Form der Reibschneiden 13a,13b entspricht, mit Ausnahme des Axialbereichs 15, zumindest annähernd der Form der Schlichtschneiden 8a,8b in dem in den Figuren 1 bis 3 dargestellten Ausführungsbeispiel.

### Bezugszeichenliste

- 1: Rundlaufschneidwerkzeug, Bohrer
- 2a,2b: Hauptschneide, Kante
- 3: Schneidenteil
- 4: Spitze
- 5: Spannut
- 6: Aufnahmebereich
- 7: Schneideneck
- 8a,8b: Nebenschneide, Schlichtschneide
- 9: Übergangsbereich, Einführungsfase
- 10: gekrümmter Bereich
- 11: Schlichtbereich
- 12: Kühlkanal
- 13a,13b: Nebenschneide, Reibschneide
- 14a,14b: Schneide
- 15: Axialbereich
- 16: Krümmungsbereich
- 17: Nebenfreifläche
- 18: Freiflächenkante, Kante

- α: Übergangswinkel
- β: Nebenschneidenwinkel
- HR: Hauptschneidenradius
- M: Mittelachse
- MR: maximaler Schneidenradius
- R1,R2,R3: Krümmungsradius

## Patentansprüche

1. Rundlaufschneidwerkzeug, insbesondere Bohrer, mit mindestens zwei Schneiden (14a,14b), die jeweils eine Hauptschneide (2a,2b) aufweisen und, insbesondere symmetrisch, um die Mittelachse (M) eines Schneidenteils (3) angeordnet sind, wobei
- der Hauptschneidenradius (HR) geringer als der maximale Schneidenradius (MR) des Schneidenteils (3) ist,
- mindestens eine einer Hauptschneide (2a,2b) zugeordnete, zumindest in einem Teilbereich gekrümmte als Schlichtschneide ausgebildete Nebenschneide (8a,8b,13a,13b) vorgesehen ist, die mehrere Krümmungsradien (R1,R2,R3) aufweist, wobei in einem äußeren Schlichtbereich (11) im Bereich des maximalen Schneidenradius (MR) der Krümmungsradius (R2) der Schlichtschneide (8a,8b,13a,13b) mindestens so groß wie der maximale Schneidenradius (MR) ist,
- sich das Schneidenteil (3), anschließend an den äußeren Schlichtbereich (11), in Richtung von den Hauptschneiden (2a,2b) weg, verjüngt.

2. Rundlaufwerkzeug nach Anspruch 1,
**dadurch gekennzeichnet,**
**dass** jede einer Hauptschneide (2a,2b) zugeordnete Schlichtschneide (13a,13b) an einem Schneideneck (7) unter einem Übergangswinkel (α') von mindestens 140° und maximal 179° an eine Kante (18) grenzt.

3. Rundlaufwerkzeug nach Anspruch 1,
**gekennzeichnet durch**
einen Axialbereich (15) einer Schneide (14a,14b), der sich zumindest im Wesentlichen parallel zur Mittelachse (M) an die zugehörige Hauptschneide (2a,2b) anschließt.

4. Rundlaufschneidwerkzeug nach Anspruch 3,
**dadurch gekennzeichnet,**
**dass** der Übergangswinkel (α) zwischen der Hauptschneide (2a,2b) und dem angrenzenden Axialbereich (15) mindestens 110° und maximal 121° beträgt.

5. Rundlaufschneidwerkzeug nach Anspruch 3 oder 4,
**dadurch gekennzeichnet,**
**dass** die Länge (L) des Axialbereichs (15) geringer als der maximale Schneidenradius (MR) ist.

6. Rundlaufschneidwerkzeug nach einem der Ansprüche 1 bis 5,
**dadurch gekennzeichnet,**
**dass** die Nebenschneide (8a,8b,13a,13b) mit der Mittelachse (M) einen maximalen Nebenschneidenwinkel (β) von mindestens 30° und maximal 60° einschließt.

7. Rundlaufschneidwerkzeug nach einem der Ansprüche 1 bis 6,
**dadurch gekennzeichnet,**
**dass** der Hauptschneidenradius (HR) mindestens 90% und maximal 98% des maximalen Schneidenradius (MR) beträgt.

8. Rundlaufschneidwerkzeug nach einem der Ansprüche 1 bis 7,
**dadurch gekennzeichnet,**
**dass** eine Nebenschneide (8a,8b,13a,13b) als Reibschneide (13a,13b) ohne anschließende Hauptschneide ausgebildet ist und diese Reibschneide (13a,13b) als Schlichtschneide den maximalen Schneidenradius (MR) bestimmt.

9. Rundlaufschneidwerkzeug nach einem der Ansprüche 1 bis 8,
**dadurch gekennzeichnet,**
**dass** eine Nebenschneide (8a,8b,13a,13b) im Bereich des maximalen Schneidenradius (MR) gerade ist.

10. Rundlaufschneidwerkzeug nach einem der Ansprüche 1 bis 9,
**dadurch gekennzeichnet,**
**dass** eine Nebenschneide (8a,8b,13a,13b) aus polykristallinem Diamant (PKD) gebidet ist.

11. Rundlaufschneidwerkzeug nach einem der Ansprüche 1 bis 9,
**dadurch gekennzeichnet,**
**dass** eine Nebenschneide (8a,8b,13a,13b) aus kubischem Bornitrit (CBN) gebildet ist.

12. Rundlaufschneidwerkzeug nach einem der Ansprüche 1 bis 9,
**dadurch gekennzeichnet,**
**dass** eine Nebenschneide (8a,8b,13a,13b) aus Keramik gebildet ist.

13. Rundlaufschneidwerkzeug nach einem der Ansprüche 1 bis 12,
**dadurch gekennzeichnet,**
**dass** eine Schneide (2a,2b,8a,8b,13a,13b) auf einem Grundkörper (3,6) aus Hartmetall gehalten ist.

14. Rundlaufschneidwerkzeug nach einem der Ansprüche 1 bis 12,
**dadurch gekennzeichnet,**
**dass** eine Schneide (2a,2b,8a,8b,13a,13b) auf einem Grundkörper (3,6) aus Cermet gehalten ist.

## Claims

1. Rotary cutting tool, in particular a drill, comprising at least two cutting edges (14a, 14b) which have a respective main cutting edge (2a, 2b) and are arranged, in particular symmetrically, about the centre axis (M) of a cutting part (3),
- the main cutting edge radius (HR) being smaller than the maximum cutting edge radius (MR) of the cutting edge part (3),
- at least one secondary cutting edge (8a, 8b, 13a, 13b) being provided which is assigned to a main cutting edge (2a, 2b), is curved at least in a section, is designed as a finishing cutting edge and has a plurality of radii of curvature (R1, R2, R3), the radius of curvature (R2) of the finishing cutting edge (8a, 8b, 13a, 13b), in an outer finishing region (11) in the region of the maximum cutting edge radius (MR), being at least as large as the maximum cutting edge radius (MR),
- the cutting edge part (3) narrowing in a direction away from the main cutting edges (2a, 2b) following the outer finishing region (11).

2. Rotary cutting tool according to Claim 1, **characterized in that** each finishing cutting edge (13a, 13b) assigned to a main cutting edge (2a, 2b) adjoins an edge (18) at a cutting edge corner (7) at a transition angle (α') of at least 140° and at most 179°.

3. Rotary cutting tool according to Claim 1, **characterized by** an axial region (15) of a cutting edge (14a, 14b), this axial region (15) adjoining the associated main cutting edge (2a, 2b) at least essentially parallel to the main axis (M).

4. Rotary cutting tool according to Claim 3, **characterized in that** the transition angle (α) between the main cutting edge (2a, 2b) and the adjoining axial region (15) is at least 110° and at most 121°.

5. Rotary cutting tool according to Claim 3 or 4, **characterized in that** the length (L) of the axial region (15) is less than the maximum cutting edge radius (MR).

6. Rotary cutting tool according to one of Claims 1 to 5, **characterized in that** the secondary cutting edge (8a, 8b, 13a, 13b) encloses with the centre axis (M) a maximum secondary cutting edge angle (β) of at least 30° and at most 60°.

7. Rotary cutting tool according to one of Claims 1 to 6, **characterized in that** the main cutting edge radius (HR) is at least 90% and at most 98% of the maximum cutting edge radius (MR).

8. Rotary cutting tool according to one of Claims 1 to 7, **characterized in that** a secondary cutting edge (8a, 8b, 13a, 13b) is designed as a reaming cutting edge (13a, 13b) without adjoining main cutting edge, and this reaming cutting edge (13a, 13b), as finishing cutting edge, determines the maximum cutting edge radius (MR).

9. Rotary cutting tool according to one of Claims 1 to 8, **characterized in that** a secondary cutting edge (8a, 8b, 13a, 13b) is straight in the region of the maximum cutting edge radius (MR).

10. Rotary cutting tool according to one of Claims 1 to 9, **characterized in that** a secondary cutting edge (8a,8b, 13a, 13b) is formed from polycrystalline diamond (PCD).

11. Rotary cutting tool according to one of Claims 1 to 9, **characterized in that** a secondary cutting edge (8a, 8b, 13a, 13b) is formed from cubic boron nitride (CBN).

12. Rotary cutting tool according to one of Claims 1 to 9, **characterized in that** a secondary cutting edge (8a, 8b, 13a, 13b) is formed from ceramic.

13. Rotary cutting tool according to one of Claims 1 to 12, **characterized in that** a cutting edge (2a, 2b, 8a, 8b, 13a, 13b) is held on a carbide parent body (3, 6).

14. Rotary cutting tool according to one of Claims 1 to 12, **characterized in that** a cutting edge (2a, 2b, 8a, 8b, 13a, 13b) is held on a cermet parent body (3, 6).

## Revendications

1. Outil de coupe rotatif, en particulier un foret, comprenant au moins deux tranchants (14a, 14b) qui présentent respectivement un tranchant principal (2a, 2b) et qui sont disposés en particulier de façon symétrique autour de l'axe (M) d'une partie à tranchants (3), dans lequel
- le rayon de tranchant principal (HR) est inférieur au rayon de tranchant maximal (MR) de la partie à tranchants (3),
- au moins un tranchant secondaire (8a, 8b, 13a, 13b) affecté à un tranchant principal (2a, 2b), réalisé comme un tranchant lisse courbé dans une zone partielle et présentant plusieurs rayons de courbure (R1, R2, R3) est prévu, dans lequel dans une zone lisse (11) au niveau du rayon de tranchant maximal (MR), le rayon de courbure (R2) du tranchant lisse (8a, 8b, 13a, 13b) est au moins aussi grand que le rayon de tranchant maximal (MR),
- la partie à tranchants (3) s'effile après la zone lisse extérieure (11) dans la direction s'éloignant des tranchants principaux (2a, 2b).

2. Outil de coupe rotatif selon la revendication 1, **caractérisé en ce que** chaque tranchant lisse (13a, 13b) affecté à un tranchant principal (2a, 2b) est adjacent à une arête (18) dans un point d'attaque (7) sous un angle de transition (α') au moins de 140° et au plus de 179°.

3. Outil de coupe rotatif selon la revendication 1, **caractérisé par** une zone axiale (15) d'un tranchant (14a, 14b) qui est adjacent au tranchant principal associé (2a, 2b), au moins substantiellement en parallèle à l'axe (M).

4. Outil de coupe rotatif selon la revendication 3, **caractérisé en ce que** l'angle de transition (α) entre le tranchant principal (2a, 2b) et la zone axiale adjacente (15) s'élève au moins à 110° et au plus à 121°.

5. Outil de coupe rotatif selon la revendication 3 ou 4, **caractérisé en ce que** la longueur (L) de la zone axiale (15) est inférieure au rayon de tranchant maximal (MR).

6. Outil de coupe rotatif selon l'une quelconque des revendications 1 à 5, **caractérisé en ce que** le tranchant secondaire (8a, 8b, 13a, 13b) forme avec l'axe (M) un angle de tranchant secondaire maximal (β) au moins de 30° et au plus de 60°.

7. Outil de coupe rotatif selon l'une quelconque des revendications 1 à 6, **caractérisé en ce que** le rayon de tranchant principal (HR) s'élève au moins à 90 % et au plus à 98 % du rayon de tranchant maximal (MR).

8. Outil de coupe rotatif selon l'une quelconque des revendications 1 à 7, **caractérisé en ce qu'**un tranchant secondaire (8a, 8b, 13a, 13b) est réalisé comme un tranchant de friction (13a, 13b) sans tranchant principal adjacent et **en ce que** ce tranchant de friction (13a, 13b) détermine en tant que tranchant lisse le rayon de tranchant maximal (MR).

9. Outil de coupe rotatif selon l'une quelconque des revendications 1 à 8, **caractérisé en ce qu'**un tranchant secondaire (8a, 8b, 13a, 13b) au niveau du rayon de tranchant maximal (MR) est droit.

10. Outil de coupe rotatif selon l'une quelconque des revendications 1 à 9, **caractérisé en ce qu'**un tranchant secondaire (8a, 8b, 13a, 13b) est réalisé en diamant polycristallin (PKD).

11. Outil de coupe rotatif selon l'une quelconque des revendications 1 à 9, **caractérisé en ce qu'**un tranchant secondaire (8a, 8b, 13a, 13b) est réalisé en nitrure de bore cubique (CBN).

12. Outil de coupe rotatif selon l'une quelconque des revendications 1 à 9, **caractérisé en ce qu'**un tranchant secondaire (8a, 8b, 13a, 13b) est réalisée en céramique.

13. Outil de coupe rotatif selon l'une quelconque des revendications 1 à 12, **caractérisé en ce qu'**un tranchant (2a, 2b, 8a, 8b, 13a, 13b) est maintenu sur un corps de base (3, 6) en métal dur.

14. Outil de coupe rotatif selon l'une quelconque des revendications 1 à 12, **caractérisé en ce qu'**un tranchant (2a, 2b, 8a, 8b, 13a, 13b) est maintenu sur un corps de base (3, 6) en cermet.
